Europäisches Patentamt

European Patent Office

Office européen des brevets

(19)

(11) Publication number: 0 104 756
A2

# (12) EUROPEAN PATENT APPLICATION

(21) Application number: 83304826.7

(22) Date of filing: 22.08.83

(51) Int. Cl.³: G 06 K 19/08

(30) Priority: 30.08.82 US 413077

(43) Date of publication of application:
04.04.84 Bulletin 84/14

(84) Designated Contracting States:
AT CH DE FR GB LI LU NL SE

(71) Applicant: VISA INTERNATIONAL SERVICE
ASSOCIATION
600 Montgomery Street
San Francisco California 94102(US)

(72) Inventor: Huemer, David A.
110 Redwood Drive
Hillsborough California 94010(US)

(72) Inventor: Hynes, John E.
6417 Deer Park Road
Reisterstown Maryland 21136(US)

(74) Representative: Pears, David Ashley et al,
REDDIE & GROSE 16 Theobalds Road
London WC1X 8PL(GB)

(54) Improved card for use with electronically approved transactions.

(57) The card includes machine readable encoding for iden-
tifying the customer, e.g. a magnetic stripe on the back. The
card (20) is rendered incapable of being embossed in an
authentic-looking manner. This impedes the ability of
fraudulent users to alter the card, to avoid the necessity of
obtaining electronic authorization. In one embodiment, the
card is arranged to provide a visual indication to warn a
merchant of an unauthorized alteration, e.g. by placing the
signature panel (34) over the area which would be embos-
sed, or by printing a fine line pattern over this area or
encapsulating ink beads in this area. In another embodiment,
the card is formed from a material which resists deformation,
e.g. metal or a brittle material.

FIG-2.

EP 0 104 756 A2

### IMPROVED CARD FOR USE WITH ELECTRONICALLY APPROVED TRANSACTIONS

The subject invention relates to a card for use in electronically approved transactions. The object of the invention is to impede the ability of fraudulent users to alter the card and avoid the requirement of instantaneous electronic authorization.

In the present day economy, a variety of methods have been developed for carrying out transactions without the need for currency. For example, cheque writing has long been used by consumers to avoid having to carry large amounts of cash in their daily lives. Another system whose use has increased dramatically in the last decade is the well known credit card networks.

In a credit card system, a customer will apply to an issuer bank for the privilege of receiving a credit card. The issuer bank will evaluate the credit worthiness of the customer prior to the issuance of a card. Once the card has been issued, the customer may use the card to carry out a variety of transactions without the use of currency. For example, cards are used to purchase goods, services, or even to obtain cash.

In a typical purchase transaction, the customer presents his card to the merchant as payment for goods. The merchant will always create a paper record (sales draft) of the transaction which includes the customer's account number and the amount of the purchase. If the

0104756

transaction exceeds a predetermined amount (merchant floor limit), the merchant will frequently attempt to contact his merchant bank to obtain authorization for the transaction. Authorization is accomplished using an electronic communication system to which merchant banks and card issuing banks are connected. The issuer's authorization approval number is then recorded on the sales draft. Authorization requests are made in less than ten percent of the transactions.

To facilitate the making of this sales draft, an impression is made of the embossments on the card. More particularly, credit cards are typically formed from a rectangular piece of PVC plastic having a strip of raised numbers and letters corresponding to the account number associated with the customer. The merchant will place the card, along with a multi-paged carboned sales draft, into an imprinter. The imprinter functions to place pressure on the sales draft and the card in order to transfer the account number onto the sales draft. The customer signs the sales draft to acknowledge the transaction. The customer is typically given one page of the sales draft, with the merchant retaining the remaining pages.

To obtain payment, the merchant is required to deposit the sales draft with his merchant bank. The merchant bank responds by paying the merchant the value of the transaction less a service charge. The merchant bank then draws the full transaction amount from the bank which issued the card, through an electronic interchange settlement system. The card issuer bank then bills the customer for the amount of the purchase.

A different but related system is called the debit card network. In a debit card system the customer opens a deposit account at the issuer bank. The account represents funds which may be debited by the issuer upon receiving notice of a purchase transaction by the customer. From the merchant's standpoint, a debit card transaction is the same as a credit card transaction. More particularly, the customer will present the debit card for payment of a purchase. The same authorization process described for a credit card is followed. More particularly, the merchant will create a hard record of the transaction (sales draft) using an imprinter. If the purchase exceeds the merchant floor limit, the merchant will try to obtain electronic approval of the transaction. The customer signs the sales draft to acknowledge the transaction. The merchant then deposits a copy of the sales draft with his merchant bank for payment. The merchant bank in turn draws the amount from the issuer bank through the interchange settlement system. Rather than billing the customer for the amount, in a debit card system, the issuer bank merely debits the deposit account of the customer.

The creation of the debit card system was intended to permit a greater percentage of the populace to take advantage of the mechanics established for noncurrency transactions. As mentioned above, to obtain a credit card, the customer must establish he is credit worthy. One would assume that the debit card system, where a customer is required to place funds on deposit, prior to receiving a card, would permit distribution of debit cards to a significantly wider group of customers. However, this has not proved to be the case. In fact, only about one quarter of a bank's depositers are generally approved for a debit card. This situation results from the nature of the mechanical transaction (associated with below floor limit purchases) wherein the merchant has no way of knowing whether the debit card holder has sufficient funds in his deposit account to cover the purchase. Therefore, when the transaction amount is below the merchant's predetermined floor limit (about 90 percent of the time), the issuer bank in effect functions as a guarantor of the transaction to the merchant, such that the bank must depend upon the honesty and trustworthiness of the debit card holder. Accordingly, the bank still must evaluate the credit worthiness of a potential debit card customer in order to control the amount of risk it wishes to assume on "non-authorized" type transactions. This risk factor severly limits the issuance of debit cards to a bank's depositors.

Recently, innovations have been made in electronic authorization systems which are intended to improve this situation. These innovations will allow merchants to make more extensive use of the electronic authorization procedures. One type of electronic authorization procedure is disclosed in our published British Patent Application GB 2·118 341.

As pointed out above, in an electronic authorization system, the merchant is provided with an input terminal which is connected through an electronic switching network to the issuer bank. The connection can be relatively complex and may include ground linkage, microwave transmission, satellite communications or other means. In addition, the connection may be through various intermediaries and may terminate in a central processing area which contains information supplied by the issuer. In any event, the concept is to directly provide the merchant with information concerning the customer's account records at the point of sale.

In a situation where a merchant is provided with an electronic input terminal, the transaction can be entered into the terminal for transmission to the issuer. To facilitate the data input to the terminal, the card will typically be provided with machine readable information for identifying the customer. The issuer can then check the records of the customer to determine if sufficient funds exist in the deposit account to cover the transaction. If sufficient funds exist, an approval signal can be immediately returned to the merchant permitting him to complete the transaction.

As can be appreciated, if the issuer bank was assured that all transactions could first be authorized by checking the customer's account, they would be free to issue debit cards to a larger group of depositors. Another advantage of the electronic transaction system is that it eliminates the necessity of physically creating and transferring hard copy records such that the time period necessary to complete the entire cycle of the reconciliation procedure is reduced, thereby saving the banking system the cost of outstanding funds.

The electronic authorization procedure also provides many advantages in the credit card system. For example, instead of the merchant checking to see if the customer has funds in a deposit account, the system can be used to check to see if the card being used is stolen or whether the customer has gone beyond his credit limits. Further, in an input terminal environment, the electronic authorization procedure can be used to check machine readable security features incorporated in the card.

If an issuer bank wishes to distribute bank cards to a larger percentage of its customer base, it would have to be assured that all transactions carried out with the bank cards would be subject to an electronic authorization procedure. As pointed out above, the mechanical, off-line transaction procedure is less desirable since there is a far greater opportunity for fraudulent abuse. Accordingly, any bank cards issued to less credit worthy customers must be limited for use with the electronic authorization procedure.

0104756

For a variety of reasons, it would be desirable to fabricate the new bank card with the appearance of the well known bank cards. For example, consumers have become conditioned to associate the rectangular planar plastic card with non-currency transactions. In addition, since the new bank cards would be issued to less credit worthy customers, there could be a psychological stigma associated therewith if their appearance was significantly different from the more common bank cards. Therefore, it is necessary to provide a new bank card which can only be used in a transaction that is electronically approved, yet still has the overall appearance of a well known bank card.

This object is achieved in the subject invention by providing a card, having the general appearance of a bank card, but which has not been embossed. As discussed above, prior art bank cards are provided with raised indicia for creating an impression on a hard copy record. As can be appreciated, a card which does not have the raised indicia or embossments would be incapable of producing a hard copy record. Therefore, a nonembossed bank card can only be used in an electronic transaction.

Based on the above, it should be apparent that the distribution of a nonembossed bank card would satisfy the object of an issuer bank in providing cards to a greater number of customers. However, the distribution of such a card would also open new avenues for fraudulent usage. More particularly, there is considerable danger that a nonembossed card having the appearance of a bank card could be altered to function as a prior art bank card. For example, a card formed from a typical thermoflow plastic is relatively malleable and can be deformed with commercially available embossers. In use, the card is subjected to pressure in the embosser to deform the plastic creating the embossments. Thus, a card which is issued for the sole purpose of electronic transactions can be altered relatively easily to approximate a prior art bank card. If this alteration were made, a merchant could carry out a transaction without first obtaining an electronic authorization. Thus, it would be highly desirable to provide a card which not only is intended to be limited to electronic use, but also contains a means to substantially inhibit its alteration to a card usable in a mechanical transaction.

Accordingly, it is an object of the invention to provide a new and improved card which is usable only in an electronic transaction environment.

According to the present invention there is provided a planar bank card adapted for use in a terminal designed for electronically approving customer transactions, comprising machine readable means on the card for identifying the customer, characterised in that the card is unembossed and is so formed as to resist authentic-looking embossing inhibiting said card from being altered in order to avoid an electronic approval process.

It will be appreciated that the term "bank card" is used to denote any kind of card used in approving customer transactions, including credit cards, debit cards and the cards customarily called bank cards (with a more restricted sensed) in the United Kingdom.

In accordance with these and many other objects, the subject invention provides for a bank card particularly adapted for use with electronic transaction procedures. More particularly, a bank card is provided having machine readable data for identifying the customer. A variety of means may be used to obtain the machine readable data. For example, a magnetic strip encoded with account information can be placed on the card. In addition, account information can be displayed using one or more machine readable systems including the Universal Product Code (UPC) and optical character reader (OCR) formats. Any of the above systems are compatible with automatic electronic data input.

In accordance with the subject invention, the card is designed to be usable only in an electronic environment. Accordingly, the card is produced without the embossments typically found on prior art bank cards. In addition, the subject card is provided with a means to inhibit an unauthorized attempt to alter the card for use in a mechanical environment. This object is achieved by providing the card with a means for resisting embossing.

A variety of means for inhibiting the embossment of a bank card are disclosed. One means includes forming the card from a relatively nonembossable material. Some of the nonembossable materials disclosed include thermoset plastics and plastics which have been treated either chemically or by radiation. Other possibilities include the use of polyester, glasses, glass epoxies, rubber or metal inserts. The means for resisting embossing may also include a warning means for providing a visual indication to a merchant if the card has been altered, or an attempt to alter the card was made. In one embodiment, the warning means is defined by incorporating, within the card, microencapsulated beads of ink that rupture upon impact. In addition, the card may be provided with a fine line printed pattern which would distort upon deformation of the card. In another embodiment, a signature panel is placed in the area of potential embossment, such that if the card was embossed, the signature of the customer would be distorted.

The invention will be described in more detail, by way of example, with reference to the accompanying drawings, in which:

Figure 1 is a front elevational view of a prior art bank card.

Figure 2 is a front elevational view of a new and improved bank card formed in accordance with the subject invention.

Figure 3 is a rear elevational view of the new and improved bank card formed in accordance with the subject invention.

Figure 4 is a front elevational view of the second embodiment of a bank card formed in accordance with the subject invention.

Figure 5 is a front elevational view of the third embodiment of a bank card formed in accordance with the subject invention.

Figure 6 is an enlarged cross sectional view of the fourth embodiment of a bank card formed in acocrdance with the subject invention.

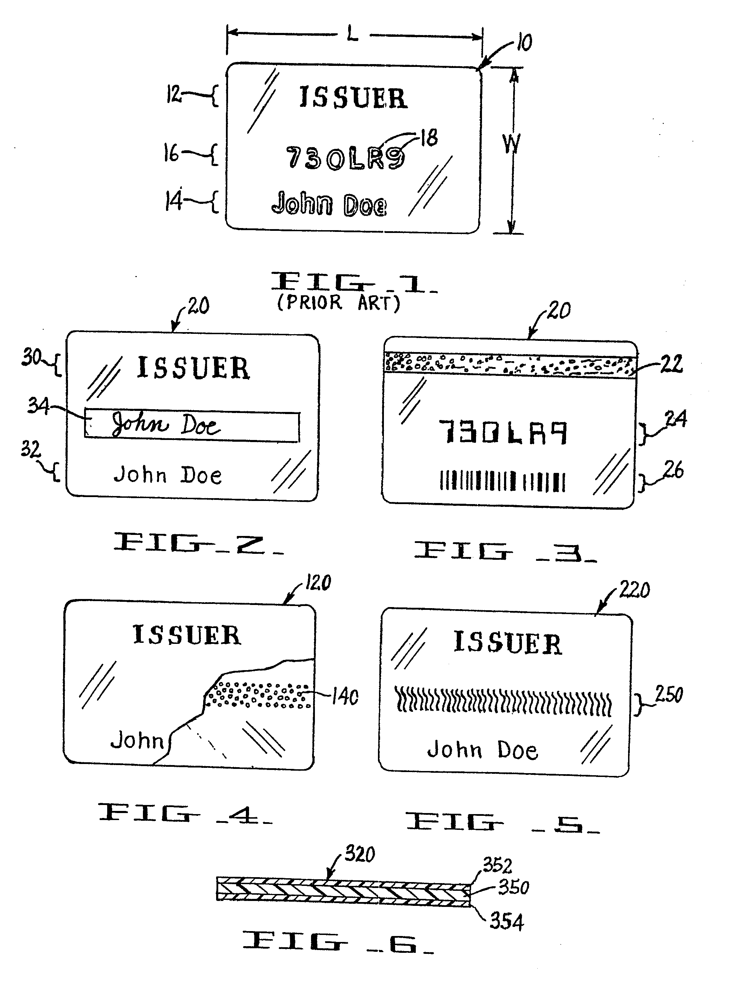

Referring to Figure 1, there is illustrated a typical bank card found in the prior art. The bank card 10 is formed from a thermoflow plastic, such as polyvinyl chloride (PVC). The card typically has a length L of 85 mm and width W of approximately 50 mm. Card 10 has a thickness of 0.75 mm.

The front side of most cards is divided into a group of areas or fields in which indicia can be printed. For example, in the upper field 12, the name of the issuer is often printed. In the lower field 14, the name of the customer is either printed or embossed. Where characters are embossed, their location on the card, as well as their size and type font characteristics is specified by various international agreements. Lower field 12 may also be embossed with additional information such as the expiration date of the card.

The central field 16 is reserved for the embossment of account information identifying the customer. The raised indicia 18 on the card can be formed using a commercially available embosser. An embosser is a device which places pressure on the PVC plastic in order to deform the card.

The prior art bank cards 10 may also be provided with electronic machine readable data. Frequently, the machine readable information is located on the rear of the card and may include a magnetic stripe (not shown) having account information encoded thereon. An embossed card having machine readable data can be used in both electronic and mechanical transactions.

The rear of the card may also include a signature panel (not shown). The signature panel is formed from a material which is difficult to erase, such that a customer's signature resists alteration. In many cases, the signing of the card by the customer indicates his willingness to accept the terms and conditions of the issuer for using the card.

Referring now to Figures 2 and 3, a card formed in accordance with the subject invention is illustrated. The card 20 may be utilized only in electronic transactions. This objective is achieved by providing a card which is not embossed. However, a means must also be provided to inhibit the embossing of the card. More particularly, if a fraudulent user were to emboss the card with an account number, the card could be used in a mechanical transaction, thereby defeating the electronic authorization procedure. As mentioned above, embossing devices are commercially available such that fraudulent alteration could be readily achieved absent the improvements disclosed herein.

As illustrated in Figure 3, the subject card is provided with a machine readable data for identifying the customer. The means can include a magnetic stripe 22 which is electrically encoded with the account information of the customer. The card may also be provided with the account information 24, displayed in a type font compatible with an optical character reader or OCR. OCR technology is well known in the art and need not be described herein. To enable the subject card to be fully compatible with a variety of prior art electronic readers, the card may also be provided with customer information displayed in the Universal Product Code (UPC) 26 format. The Universal Product Code 26 is a series of lines and spaces of different thickness printed in a defined pattern, which is readable by an optical scanner. Similar to OCR technology, UPC technology is well known and need not be described herein.

It is intended that the scope of the subject invention include any of the above discussed machine readable formats, whether alone or in combination. In addition, the subject invention also can be considered to include any other machine readable format which has been, or will be developed. The machine readable encoding permits the merchant to automatically input

0104756

the customer data directly into his point of sale terminal in order to obtain an electronic approval signal for the transaction, in the manner discussed above.

Referring to Figure 2, it will be seen that the front face of the card 20 includes an upper field 30 wherein the name of the issuer may be printed. A lower field 32 is also provided where the name of the customer may be presented. As can be appreciated, this arrangement is intended to correspond to the bank cards of the prior art. These fields may of course be provided with additional information, such as expiration dates or trademarks associated with the issuer. Therefore, the scope of the subject invention is not intended to be limited by the displays illustrated in these fields.

In accordance with the subject invention, bank card 20 is provided with a means for resisting embossing to inhibit the card from being altered, for avoiding the electronic approval process. In the first embodiment, the objective is achieved by incorporating a warning means which will provide a visual indication of any attempts to alter the card. More particularly, and as illustrated in Figure 2, a signature panel 34 is formed in the area reserved by agreement for embossing account information. The signature panel 34, which can be formed in a manner similar to those known in the prior art, is signed by the customer signifying his acceptance of the terms and conditions of the issuer.

The location of signature panel 34 in the embossment field functions to provide a reliable indication of any attempts to emboss the card. More particularly, as discussed above, the embossment procedure requires the card to be subjected to pressure, causing the deformation of the plastic material. If this process were attempted with the subject card, the deformation would cause a distortion of the signature, such that a merchant would be put on notice that the card has been altered. By this arrangement, attempts to circumvent the electronic approval of a transaction can be foiled.

Referring to Figure 4, another means is shown for providing a visual indication if the card has been altered. In the second embodiment, card 120 is formed with a plurality of microencapsulated ink beads 140. Microencapsulation of liquids is a technique well known in the art and need not be described.

Ink beads 140 are designed to rupture if placed under pressure. Accordingly, if an attempt was made to deform the card, the pressure of the embosser would rupture the beads, spreading the ink and alerting the merchant to the fraudulent alteration.

The microencapsulated ink beads may be spread throughout the full surface of the card or may be limited to the area typically reserved for embossment. One method of ensuring that the rupture of the beads would be visible is to provide an overlayer of plastic which is transparent or translucent.

Referring to Figure 5, another warning means designed to provide a visual indication of the fraudulent embossment is disclosed. In card 220, the field reserved for embossment is printed with a fine-line pattern, shown generally at 250. The fine-line pattern 250 is designed to give a specific overall visual effect. If this fine-line pattern were distorted through embossment, the alteration would be readily apparent. Similar to the first two embodiments, an effort to fraudulently emboss the card would provide a clear visual indication of the illicit alteration.

Referring to Figure 6, there is disclosed an alternative approach to supplying a means for inhibiting embossment. In the alternative approach, the card is formed from a material which resists deformation. As discussed above, prior art bank cards are typically formed from a flowable thermal plastic which can be molded through pressure. In contrast, the subject card is intended to be formed from a material which resists molding by known procedures.

As can be appreciated, it would be extremely difficult and highly expensive to develop a card which is incapable of deformation under any circumstances. However, the object of the subject invention is to substantially inhibit the ability of the card to be embossed such that the amount of effort necessary to deform the card will act as a substantial deterrent to fraudulent alteration. For example, commercially available embossers are capable of producing a known amount of deformation force. It is intended that the subject cards be, at a minimum, resistant to deformation under the pressure of commercial embossers.

Referring to Figure 6, it will be seen that a multilayer card 320 is illustrated. The card may be formed with a central core 350 of a material which resists embossment. The outer layers 352 and 354, respectively, may be formed from typical PVC material, such that the look and the feel of the well-known bank card can be maintained. By this arrangement, the well developed methods associated with prior art bank cards, such as the printing of indicia or the application of machine readable codes, will not have to be altered to accommodate the subject cards. Of course, it is well within the scope of the subject invention to provide a card which is formed solely from an emboss-resistant material. Further, the emboss resistant material may be located only in the area reserved for embossment.

An emboss-resistant material can be produced from a thermal set plastic. Thermal set plastics are are formed in a chemical reaction and are essentially non-deformable. Rather, when subjected to pressure, thermal set plastics will crack rather than flow. One example of a suitable non-deformable thermoset plastic is melamine, marketed under the trademark "FORMICA".

Other suitable plastics can be formed from glass epoxy resins such as fiberglass. In addition, plastics can be made non-deformable through chemical or radiation treatment.

Another material which is highly resistant to embossing is glass. While glass does have some flowable characteristics, it takes an extremely long period of time to bring about such deformation. The effort which would be necessary to emboss glass would act as a sufficient deterent to fraudulent practices. Another example of a suitable material 350 is polyester. While polyester materials are capable of being deformed, they will return to their original shape very easily. Accordingly, if a card formed from polyester were embossed, the raised indicia would be flattened upon the card's first use in a mechanical imprinter. Other emboss resistant materials include metal and rubber.

In summary, there has been provided a new and improved card adapted solely for use in electronic transactions. The subject card includes machine readable encoding for identifying the customer. The card is formed without embossments such that it cannot be used in a mechanical transaction. In addition, the card is provided with a means for resisting embossing. The means can include a warning structure which would give a visual indication if the card were fraudulently embossed. In the alternative, the card can be formed from a material which resists embossing. By this arrangement, the likelihood of the card being altered, in order to avoid the electronic approval process, is substantially reduced.

While the subject invention has been described with reference to preferred embodiments, it is to be understood that various other changes and modifications could be made therein, by one skilled in the art, without varying from the scope and spirit of the subject invention as defined by the appended claims.

CLAIMS

1. A planar bank card (20) adapted for use in a terminal designed for electronically approving customer transactions comprising machine readable means (22, 24, 26) on the card for identifying the customer, characterised in that the card (20) is unembossed and is so formed as to resist authentic-looking embossing inhibiting said card from being altered in order to avoid an electronic approval process.

2. A card as recited in claim 1, characterised in that the card (20) is formed at least partially from a material (350) which resists deformation.

3. A card as recited in claim 2, characterised in that the material (350) is limited to an area which would normally be embossed.

4. A card as recited in claim 2 or 3, characterised in that the material comprises melamine or another thermoset plastic.

5. A card as recited in claim 2 or 3, characterised in that the material is a chemically treated plastic or a radiation treated plastic.

6. A card as recited in claim 2 or 3, characterised in that the material is metal or rubber or glass or a polyester.

7. A card as recited in any of claims 2 to 6, characterised in that the card (20) is a multilayer structure (350, 352, 354) with one of the layers (350) being formed from the material which resists deformation.

8.    A card as recited in claim 7, characterised in that the said one layer (350) is sandwiched between two other layers (352, 354).

9.    A card as recited in claim 1, characterised by a warning means ( 34, 140, 250) formed on the card (20) in the area which would be embossed, the warning means providing an indication if the card should be embossed.

10.    A card as recited in claim 9, characterised in that the indication is visual.

11.    A card as recited in claim 10, characterised in that the warning means comprises a printed fine line pattern (250) in the area of embossment such that, if the card (20) should be embossed, the fine line pattern would be distorted.

12.    A card as recited in claim 10, characterised in that warning means comprises microencapsulated ink beads (140) whereby, if the card should be embossed, the ink beads would rupture.

13.    A card as recited in claim 10, characterised in that the warning means comprises a signature panel (34) in the area which would be embossed such that, if the card should be embossed, the signature would be distorted.

14.    A card as recited in any preceding claim, characterised in that means for identifying the customer comprises one or more of a magnetic stripe (22) encoded with account information, machine readable indicia (26) displayed in the uniform product code format, and machine readable indicia (24) displayed in optical character reader format.

FIG_1.
(PRIOR ART)

FIG_2.

FIG_3.

FIG_4.

FIG_5.

FIG_6.